(19) Europäisches Patentamt
European Patent Office
Office européen des brevets

(11) **EP 3 607 100 B1**

(12) **EUROPÄISCHE PATENTSCHRIFT**

(45) Veröffentlichungstag und Bekanntmachung des Hinweises auf die Patenterteilung:
**25.05.2022   Patentblatt 2022/21**

(21) Anmeldenummer: **17718031.2**

(22) Anmeldetag: **06.04.2017**

(51) Internationale Patentklassifikation (IPC):
*C22B 7/00* (2006.01)        *C22B 19/30* (2006.01)
*A23K 20/20* (2016.01)       *C22B 3/08* (2006.01)
*C22B 3/00* (2006.01)        *C01B 7/19* (2006.01)

(52) Gemeinsame Patentklassifikation (CPC):
**C22B 7/006; C01B 7/191; C01B 7/196; C22B 3/08; C22B 19/26; C22B 19/30;** Y02P 10/20

(86) Internationale Anmeldenummer:
**PCT/EP2017/058303**

(87) Internationale Veröffentlichungsnummer:
**WO 2018/184686 (11.10.2018 Gazette 2018/41)**

(54) **VERFAHREN ZUM ENTFERNEN VON FLUORID AUS EINER ZINKHALTIGEN LÖSUNG BZW. SUSPENSION, ENTFLUORIDIERTE ZINKSULFAT-LÖSUNG UND DEREN VERWENDUNG SOWIE VERFAHREN ZUR HERSTELLUNG VON ZINK UND VON FLUORWASSERSTOFF BZW. FLUSSSÄURE**

METHOD FOR REMOVING FLUORIDE FROM A ZINC-CONTAINING SOLUTION OR SUSPENSION, DEFLUORIDATED ZINC SULFATE SOLUTION AND USE THEREOF, AND METHOD FOR PRODUCING ZINC AND HYDROGEN FLUORIDE OR HYDROFLUORIC ACID

PROCÉDÉ POUR ÉLIMINER LE FLUORURE D'UNE SOLUTION OU SUSPENSION CONTENANT DU ZINC, SOLUTION DE SULFATE DE ZINC DÉFLUORÉ ET SON UTILISATION AINSI QUE PROCÉDÉ POUR PRODUIRE DU ZINC ET DU FLUORURE D'HYDROGÈNE OU DE L'ACIDE FLUORHYDRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.02.2020   Patentblatt 2020/07**

(73) Patentinhaber: **Montanuniversität Leoben**
**8700 Leoben (AT)**

(72) Erfinder:
• **LUDEWIG, Fritz**
**8750 Judenburg (AT)**

• **STEINLECHNER, Stefan**
**8793 Trofaiach (AT)**
• **ANTREKOWITSCH, Jürgen**
**8700 Leoben (AT)**

(74) Vertreter: **Dilg, Haeusler, Schindelmann Patentanwaltsgesellschaft mbH Leonrodstraße 58 80636 München (DE)**

(56) Entgegenhaltungen:
**CN-A- 106 179 180**

EP 3 607 100 B1

**Beschreibung**

GEBIET DER ERFINDUNG

Die vorliegende Erfindung betrifft ein Verfahren zum Entfernen von Fluorid aus einer zinkhaltigen Lösung bzw. Suspension, insbesondere einer Zinksulfat-Lösung. Des Weiteren betrifft die vorliegende Erfindung Verfahren zur Herstellung von Zink, insbesondere zur hydrometallurgischen Gewinnung von Zink, sowie Verfahren zur Herstellung von Fluorwasserstoff bzw. Flusssäure.

HINTERGRUND

Für die primäre Zinkindustrie aber auch für die Zinksulfatindustrie, wie zum Beispiel Düngemittelindustrie oder Futtermittelindustrie, gewinnen sekundäre Ausgangsmaterialen, die insbesondere einen niedrigen Eisengehalt und einen hohen Zinkgehalt aufweisen, zunehmend an Bedeutung. Ein limitierender Faktor ist hierbei häufig der Fluor-Gehalt der sekundären Ausgangsmaterialien, weshalb im Allgemeinen nur eingeschränkt sekundäre Rohstoffe verarbeitet werden können und diese trotzdem meist noch einer thermischen Behandlung unterzogen werden müssen, was wiederum häufig zu Nachteilen, wie zum Beispiel zu korrosive Abgasen, sowie Schwierigkeiten bei der selektiven (Rück-)Gewinnung von Blei als ein Nebenprodukt führt. Ein zu hoher Fluor-Gehalt bei Zink-Sekundärrohstoffen führt wiederum zu massiven Problemen bei der hydrometallurgischen Gewinnung von Zink, worauf mindestens 85 % der Weltzinkproduktion beruht. Auch in der Agrikulturchemie ist eine drastische Senkung der Fluorid-Gehalte bei der Herstellung von mineralischen Düngemitteln mit Zinksulfat-Zusätzen von großer Bedeutung, weil Kulturpflanzen im Allgemeinen nur sehr geringe Gehalte an löslichen Fluoriden vertragen.

In der CN 106 179 180 A wird ein Defluorierungsmaterial für eine Zinksulfatlösung beschrieben, wobei das Defluorierungsmaterial ein kalzinierter Feststoff mit einer Zusammensetzung von 70,8 - 83,5 Gew.-% $Al_2O_3$, 1,3 - 3,8 Gew.-% Seltenerdoxid, 8,8 - 16.1 Gew.-% $Fe_2O_3$ und 6,4-14,3 Gew.-% MgO ist, der vorzugsweise eine spezifische Oberfläche (BET) vom 200 bis 238 m$^2$/g aufweist. Der kalzinierte Feststoff dient als ein Adsorptionsmittel für Fluorid. Es können hiermit Zinksulfatlösungen mit einer verbleibenden Menge an Fluoridionen von 45 bis 65 mg/l erhalten werden, was aber nach wie vor ein zu hoher Fluorid-Gehalt für die hydrometallurgische Gewinnung von Zink darstellt.

Es besteht daher ein Bedarf, fluoridbelastete Zink-Sekundärrohstoffe, wie zum Beispiel Wälzoxide, so aufzubereiten, insbesondere zu entfluoridieren, dass sie in der primären Zinkindustrie bzw. bei der Zinksulfatherstellung eingesetzt werden können, ohne den oben beschriebenen Einschränkungen bzw. Nachteilen zu unterliegen.

AUFGABEN DER ERFINDUNG

Eine Aufgabe der vorliegenden Erfindung ist es daher, ein Verfahren bereitzustellen, mit dem eine zinkhaltige Lösung bzw. Suspension, die zum Beispiel aus einem fluoridbelasteten Zink-Sekundärrohstoff erhalten wurde, entfluoridiert werden kann, so dass solche fluoridhaltigem Zink-Sekundärrohstoffe der primären Zinkindustrie bzw. der Zinksulfatindustrie, insbesondere zur hydrometallurgischen Zinkgewinnung, zugänglich gemacht werden können, ohne dass Einschränkungen bzw. Probleme auf Grund von Fluorid-Gehalten auftreten. Des Weiteren ist angestrebt, dass ein solches Verfahren möglichst wirtschaftlich effizient und ressourcensparend und somit umweltfreundlich durchgeführt werden kann. Darüber hinaus ist es ein Ziel der vorliegenden Erfindung, aus einem fluoridbelasteten Zink-Sekundärrohstoff sowohl Zink bzw. Zinksulfat als auch Flusssäure gewinnen zu können.

ZUSAMMENFASSUNG DER ERFINDUNG

Die Erfinder der vorliegenden Erfindung haben umfangreiche Studien zur Lösung dieser Aufgaben durchgeführt und insbesondere herausgefunden, dass aus einer zinkhaltigen Lösung bzw. Suspension Fluoride mittels Lösungen von Seltenerdelementsalzen nahezu quantitativ ausgefällt und in effizienter Weise abgetrennt werden können.

Die vorliegende Erfindung betrifft dementsprechend ein Verfahren zum Entfernen von Fluorid aus einer zinkhaltigen Lösung bzw. Suspension, insbesondere einer Zinksulfat-Lösung, wobei das Verfahren die folgenden Schritte umfasst:

(i) Bereitstellen einer zinkhaltigen Lösung bzw. Suspension A, wobei die zinkhaltige Lösung bzw. Suspension A ferner Fluoridionen enthält;

(ii) Zugeben einer Lösung B, die ein gelöstes Salz eines Seltenerdelements enthält, zu der zinkhaltigen Lösung bzw. Suspension A, wobei ein Feststoff, der ein Seltenerdelementfluorid umfasst, und eine zinkhaltige Lösung C gebildet werden;

(iii) Abtrennen des Feststoffs von der zinkhaltigen Lösung C, wobei die zinkhaltige Lösung C eine niedrigere Konzentration an Fluoridionen aufweist als die zinkhaltige Lösung bzw. Suspension A.

Die vorliegende Erfindung betrifft auch ein Verfahren zur Herstellung von Zink aus einer zinkoxidhaltigen Zusammensetzung, insbesondere von Wälzoxid, wobei das Verfahren die folgenden Schritte umfasst:

- Bereitstellen einer Vorrichtung, die zur hydrometallurgischen Gewinnung von Zink konfiguriert ist;
- Durchführen eines erfindungsgemäßen Verfahrens zum Entfernen von Fluorid aus einer zinkhaltigen Lösung bzw. Suspension in einer weiteren Vorrichtung;
- Durchführen einer hydrometallurgischen Gewinnung von Zink aus der zinkhaltigen Lösung C mittels der zur hydrometallurgischen Gewinnung von Zink konfigurierten Vorrichtung.

Darüber hinaus betrifft die vorliegende Erfindung ein Verfahren zur Herstellung von Fluorwasserstoff bzw. Flusssäure, wobei das Verfahren die folgenden Schritte umfasst:

- Durchführen eines erfindungsgemäßen Verfahrens zum Entfernen von Fluorid aus einer zinkhaltigen Lösung bzw. Suspension;
- Behandeln des Feststoffs, der ein Seltenerdelementfluorid umfasst, mit einer Säure, insbesondere Schwefelsäure, wobei Fluorwasserstoff (HF) und eine Lösung eines Salzes, insbesondere eines Sulfats, des Seltenerdelements gebildet werden;
- Abtrennen des Fluorwasserstoffs (HF) von der Lösung des Salzes des Seltenerdelements durch beispielsweise Abdestillation.

Weitere Aufgaben und Vorteile von Ausführungsformen der vorliegenden Erfindung werden an Hand der folgenden detaillierten Beschreibung ersichtlich.

DETAILLIERTE BESCHREIBUNG DER ERFINDUNG

Im Folgenden werden nähere Details der vorliegenden Erfindung und weitere Ausführungsformen davon beschrieben. Die vorliegende Erfindung ist jedoch nicht auf die folgende detaillierte Beschreibung beschränkt, sondern sie dient lediglich der Veranschaulichung der erfindungsgemäßen Lehren.

Es sei darauf hingewiesen, dass Merkmale, die im Zusammenhang mit einer beispielhaften Ausführungsform oder einem beispielhaftem Gegenstand beschrieben werden, mit jeder anderen beispielhaften Ausführungsform oder mit jedem anderen beispielhaften Gegenstand kombiniert werden können. Insbesondere können Merkmale, die im Zusammenhang mit einer beispielhaften Ausführungsform des erfindungsgemäßen Verfahrens zum Entfernen von Fluorid beschrieben werden, mit jeder anderen beispielhaften Ausführungsform des erfindungsgemäßen Verfahrens zum Entfernen von Fluorid sowie jeder beispielhaften Ausführungsform der erfindungsgemäßen Verfahren zur Herstellung von Zink und von Fluorwasserstoff bzw. Flusssäure kombiniert werden und umgekehrt, sofern nicht ausdrücklich etwas anderes vermerkt ist.

Wenn ein Begriff mit einem unbestimmten oder bestimmten Artikel, wie zum Beispiel "ein", "eine", "eines", "der", "die" und "das", im Singular bezeichnet wird, schließt dies auch den Begriff im Plural mit ein und umgekehrt, sofern der Kontext nicht eindeutig anderes festlegt. Der Ausdruck "umfassen", wie er hier verwendet wird, schließt nicht nur die Bedeutung von "enthalten" oder "beinhalten" ein, sondern kann auch "bestehen aus" und "im Wesentlichen bestehen aus" bedeuten.

Bei dem Verfahren zum Entfernen von Fluorid aus einer zinkhaltigen Lösung bzw. Suspension wird in einem (ersten) Verfahrensschritt (Schritt (i)) eine zinkhaltige Lösung bzw. Suspension A bereitgestellt, wobei die zinkhaltige Lösung bzw. Suspension A ferner Fluoridionen enthält. Bei der zinkhaltigen Lösung bzw. Suspension A kann es sich insbesondere um eine Zinksulfat-Lösung handeln.

In einer beispielhaften Ausführungsform wird die zinkhaltige Lösung bzw. Suspension A durch zumindest teilweises Lösen einer zinkoxidhaltigen Zusammensetzung, insbesondere von Wälzoxid, gebildet. In anderen Worten ist es möglich, dass sich die zinkoxidhaltige Zusammensetzung vollständig oder teilweise löst. Im Fall eines vollständigen Lösens der zinkoxidhaltigen Zusammensetzung wird eine zinkhaltige Lösung A gebildet, während im Fall eines teilweisen Lösens der zinkoxidhaltigen Zusammensetzung eine zinkhaltige Suspension A gebildet wird.

In einer beispielhaften Ausführungsform handelt es sich bei der zinkoxidhaltigen Zusammensetzung um einen fluoridhaltigen Zink-Sekundärrohstoff, wie zum Beispiel ein Wälzoxid.

Unter einem "Wälzoxid" im Sinne der vorliegenden Anmeldung wird im Allgemeinen das Hauptprodukt eines Wälzprozesses bzw. eines Wälzverfahrens verstanden. Unter "Wälzprozess" bzw. "Wälzverfahren" wird im Allgemeinen ein metallurgisches Verfahren zur Aufarbeitung von zinkhaltigen Reststoffen, wie zum Beispiel zinkhaltige Stahlwerksstäube bzw. Elektrostahl-Filterstäube, in einem Drehrohrofen oder Rotationsofen verstanden. Dementsprechend enthält Wälzoxid im Sinne der vorliegenden Anmeldung Zinkoxid (ZnO), insbesondere als Hauptbestandteil davon. Daneben enthält Wälzoxid im Allgemeinen auch störende Verunreinigungen, wie Fluor bzw. Fluoride, Blei und andere (siehe auch Tabelle 1). Störendes Blei wird vor oder nach der Entfluoridierung z.B. durch $H_2S$ gefällt oder durch Zink auszementiert. Eine Weiterentwicklung des Wälzverfahrens mit reduziertem Energieverbrauch stellt das SDHL-Wälzverfahren dar, benannt nach den Erfindern Saage, Dittrich, Hasche und Langbein.

Typische Zusammensetzungen von Wälzoxiden aus dem SDHL-Wälzprozess sind in nachfolgender Tabelle 1 zusammengefasst, wobei "Wälzoxid (gewaschen)" bedeutet, dass (ungewaschenes) Wälzoxid einer Laugung mit heißer verdünnter Sodalösung unterzogen wurde:

Tabelle 1: Typische Zusammensetzungen von Wälzoxiden aus dem SDHL-Wälzprozess

| Gew-.% | Wälzoxid (ungewaschen) | Wälzoxid (gewaschen) |
|---|---|---|
| Zn | 55 - 65 | 65 - 68 |
| Pb | 2,3 - 5,5 | 3,9 - 6,0 |
| FeO | 2,1 - 5,4 | 3,0 - 6,0 |
| CaO | 1,4 - 4,0 | 1,8 - 4,5 |
| MgO | 0,2 - 0,5 | 0,3 - 0,6 |
| $SiO_2$ | 0,2 - 1,5 | 0,4 - 2,0 |
| Cl | 0,1 - 6,4 | 0,05 - 0,2 |
| F | 0,1 - 0,5 | 0,1 - 0,25 |
| S | 0,2 - 1,0 | 0,1 - 0,5 |
| $K_2O$ | 0,05 - 3,9 | 0,04 - 0,1 |
| $Na_2O$ | 0,3 - 3,1 | 0,1 - 0,3 |

Solche zinkoxidhaltigen Zusammensetzungen enthalten in der Regel verschiedenste Bestandteile, wie aus obiger Tabelle 1 beispielhaft ersichtlich, so dass es möglich ist, dass bei einem teilweisen Lösen der zinkoxidhaltigen Zusammensetzung das vorhandene Zink im Wesentlichen vollständig in Lösung geht und der unlösliche Rückstand keine oder allenfalls Spuren an Zink aufweist. Es ist aber auch möglich, dass bei einem teilweisen Lösen der zinkoxidhaltigen Zusammensetzung ein Teil des vorhandenen Zinks im unlöslichen Rückstand verbleibt, insbesondere in Form schwerlöslicher Zinksalze, wobei aber zumindest ein Teil des vorhandenen Zinks, insbesondere ein überwiegender Teil des vorhandenen Zinks, zum Beispiel mindestens 70%, insbesondere mindestens 80%, insbesondere mindestens 85%, insbesondere mindestens 90%, insbesondere mindestens 95% des vorhandenen Zinks, in Lösung geht und somit als Zinkionen ($Zn^{2+}$-Ionen) in der Lösung vorliegt. Bei einem lediglich teilweisen Lösen der zinkoxidhaltigen Zusammensetzung ist es auch möglich, den unlöslichen Rückstand abzutrennen, zum Beispiel mittels Filtration oder Zentrifugierung, und die hierbei erhaltene (klare) Lösung als zinkhaltige Lösung A zu verwenden.

In einer bevorzugten Ausführungsform wird die zinkoxidhaltige Zusammensetzung im Wesentlichen vollständig aufgelöst unter Erhalt einer zinkhaltigen (wässrigen) Lösung A.

In einer beispielhaften Ausführungsform wird die zinkoxidhaltige Zusammensetzung mittels einer Säure unter Bildung der zinkhaltigen Lösung bzw. Suspension A zumindest teilweise gelöst. Als die im weitesten Bereich anwendbare Säure hat sich die Schwefelsäure erwiesen, wobei auch andere Säuren, insbesondere andere Mineralsäuren, zum zumindest teilweise Lösen der zinkoxidhaltigen Zusammensetzung verwendet werden können, solange sie keine schwerlöslichen Salze mit insbesondere Zink bilden und ihre Säurestärke zum Lösen von insbesondere Zinkoxid ausreicht. Die Konzentration der eingesetzten Säure ist nicht besonders beschränkt und beträgt zum Beispiel im Fall von Schwefelsäure eine 10 bis 20 %-ige Schwefelsäure, wie z.B. eine 15 %-ige Schwefelsäure.

In manchen Ausführungsformen ist es vorteilhaft, das zumindest teilweise Lösen der zinkoxidhaltigen Zusammensetzung bei erhöhter Temperatur, zum Beispiel bei einer Temperatur im Bereich von 50 bis 80 °C, insbesondere von 60 bis 70 °C, durchzuführen. Auch ein (vorzugsweise kontinuierliches) Rühren kann das zumindest teilweise Lösen der zinkoxidhaltigen Zusammensetzung positiv beeinflussen. Die Dauer des zumindest teilweisen Lösens der zinkoxidhaltigen Zusammensetzung ist nicht besonders beschränkt und beträgt zum Beispiel 10 Minuten bis 2 Stunden, insbesondere 30 Minuten bis 1 Stunde. Ein Ende des Lösevorgangs lässt sich meist daran erkennen, dass sich der pH-Wert der wässrigen Lösung im Wesentlichen nicht (mehr) ändert mit fortschreitender Dauer. Zur Veranschaulichung wird beim zumindest teilweisen Lösen eines gewaschenen Wälzoxides mit 15 %-iger Schwefelsäure zum Beispiel ein (konstanter) End-pH-Wert von ca. pH 4 nach ca. 40 Minuten bei einer Temperatur von ca. 65 °C unter ständigem Rühren erreicht.

Bei dem Verfahren zum Entfernen von Fluorid aus einer zinkhaltigen Lösung bzw. Suspension wird in einem weiteren Verfahrensschritt (Schritt (ii)) eine Lösung B, die ein gelöstes Salz eines Seltenerdelements enthält, zu der zinkhaltigen Lösung bzw. Suspension A zugegeben. Hierbei werden ein Feststoff, der ein Seltenerdelementfluorid umfasst, und eine zinkhaltige Lösung C gebildet. Die zinkhaltige Lösung C weist eine niedrigere Konzentration an Fluoridionen auf als die zinkhaltige Lösung bzw. Suspension A.

In einer beispielhaften Ausführungsform enthält die Lösung B ein gelöstes Sulfat eines Seltenerdelements. Es ist aber grundsätzlich möglich, auch andere Salze eines Seltenerdelements (oder mehrerer Seltenerdelemente) zu verwenden, wie zum Beispiel Nitrate, solange sie gut löslich, insbesondere gut wasserlöslich, insbesondere bei einem neutralen oder schwach sauren pH-Wert gut löslich sind.

Es hat sich als vorteilhaft erwiesen, dass sich das eingesetzte Seltenerdelementsalz vollständig löst und dass somit die Lösung B eine klare wässrige Lösung eines vollständig gelösten Salzes eines Seltenerdelements ist. Hierdurch ist es möglich, eine nahezu quantitative bzw. weitgehend vollständige Ausfällung der Fluoridionen zu erreichen, die im Wesentlichen lediglich durch die Löslichkeit des gebildeten Seltenerdelementfluorids begrenzt ist, die sich aus dem Löslichkeitsprodukt des Seltenerdelementfluorids rechnerisch ermitteln lässt, und durch den Neutralsalzeffekt bzw. den Einsalzeffekt geringfügig erhöht wird. In anderen Worten ist es hierdurch möglich, die technisch und naturgesetzlich geringstmögliche Konzentration an in der zinkhaltigen Lösung C verbleibenden Fluoridionen zu erzielen. Darüber hinaus ist es hierdurch möglich, die erforderliche Menge an Seltenerdelementsalz passend zu dosieren, um eine weitgehend vollständige Ausfällung der Fluoridionen zu erreichen, ohne dass ein unnötiger Überschuss an vergleichsweise teurem Seltenerdelementsalz (auch unter dem Gesichtspunkt der Einsparung von Ressourcen) vorliegt.

In manchen Ausführungsformen ist es vorteilhaft sein, wenn die mittels der Lösung B zugegebene Menge (Stoffmenge) an Seltenerdelementsalz leicht überstöchiometrisch ist zu den in der zinkhaltigen Lösung bzw. Suspension A vorhandenen Fluoridionen. Zum Beispiel ist das molare Verhältnis der Ionen des Seltenerdelements ($RE^{n+}/n$) (wobei RE für ein Seltenerdelement steht und n für dessen Ladungszahl) zu den Fluoridionen ($F^-$), also

$$\frac{[RE^{n+}]}{n \times [F^-]} ,$$

im Bereich von 1,01 zu 1,5, insbesondere von 1,02 bis 1,4, insbesondere von 1,03 bis 1,3, wie zum Beispiel 1,05 bis 1,2, sein. Ein Überschuss an dem Seltenerdelementsalz führt zu einer weiteren Verschiebung des Fällungsgleichgewichtes hin zu dem Niederschlag an Seltenerdfluorid und somit zu einer besonders effektiven Ausfällung der Fluoridionen und dementsprechender Entfernung der Fluoridionen aus der zinkhaltigen Lösung bzw. Suspension A. Sollte ein verbleibender (d.h. nicht mit Fluoridionen umgesetzter) Überschuss an den Ionen des Seltenerdelements bei der weiteren Verwendung der zinkhaltigen Lösung bzw. Suspension A störend sein, ist es vorteilhaft, wenn diese überschüssigen Ionen des Seltenerdelements mittels eines Salzes, dessen Anion ein weniger schwerlösliches Seltenerdelementsalz als Seltenerdfluorid bildet (damit aus dem Seltenerdfluorid nicht wieder Fluoridionen freigesetzt werden), ausgefällt werden. Als ein Beispiel für solch ein Salz kann insbesondere Ammoniumoxalat angeführt werden, dessen Anion (also Oxalat) ein Seltenerdoxalat bildet, das weniger schwerlöslich als das entsprechende Seltenerdfluorid ist.

In einer beispielhaften Ausführungsform wird daher in Schritt (ii) eine Stoffmenge an dem gelösten Salz eines Seltenerdelements zugegeben, die an eine abgeschätzte (zum Beispiel aus Erfahrungswerten aus zuvor eingesetzten vergleichbaren Zink-Sekundärrohstoffen) oder zuvor ermittelte (zum Beispiel an Hand des analytisch ermittelten Gehalts an Fluorid in einer zuvor entnommen Probe der zinkhaltigen Lösung bzw. Suspension A, z.B. potentiometrisch mittels einer fluorid-sensitiven Elektrode bestimmt) Stoffmenge an Fluoridionen in der zinkhaltigen Lösung bzw. Suspension A angepasst ist. Dabei ist es vorteilhaft, wenn die Anpassung so erfolgt, dass die zugegebene Menge (Stoffmenge) an Seltenerdelementsalz leicht überstöchiometrisch ist zu der abgeschätzten oder zuvor ermittelten Stoffmenge an Fluoridionen in der zinkhaltigen Lösung bzw. Suspension A, wie oben im Detail erklärt. Wie ebenfalls oben ausgeführt, ist solch eine Anpassung bzw. passende Dosierung der Lösung B dadurch erleichtert, wenn nicht gar dadurch erst möglich sein, wenn die Lösung B eine klare wässrige Lösung eines vollständig gelösten Salzes eines Seltenerdelements ist.

In einer beispielhaften Ausführungsform ist das Seltenerdelement aus der Gruppe, bestehend aus Scandium (Sc), Yttrium (Y), Lanthan (La), Cer (Ce), Praseodym (Pr), Neodym (Nd), Promethium (Pm), Samarium (Sm), Europium (Eu), Gadolinium (Gd), Terbium (Tb), Dysprosium (Dy), Holmium (Ho), Erbium (Er), Thulium (Tm), Ytterbium (Yb) und Lutetium (Lu) ausgewählt. Im Hinblick auf die Verfügbarkeit ist das Seltenerdelement vorzugsweise aus der Gruppe, bestehend aus Lanthan (La), Cer (Ce), Praseodym (Pr) und Neodym (Nd) ausgewählt. Insbesondere hat sich auch aus Kostengründen als vorteilhaft erwiesen, wenn das Seltenerdelement Cer (Ce) umfasst.

Es können auch Kombinationen an Seltenerdelementsalzen eingesetzt werden, zum Beispiel Kombinationen an Seltenerdelementsalzen mit unterschiedlichen Seltenerdelementen aber dem gleichen Anion, Kombinationen an Seltenerdelementsalzen mit dem gleichen Seltenerdelement aber unterschiedlichen Anionen und Kombinationen an Seltenerdelementsalzen mit unterschiedlichen Seltenerdelementen und unterschiedlichen Anionen.

In einer beispielhaften Ausführungsform ist das Salz des Seltenerdelements Cersulfat, wie insbesondere Cer(III)-Sulfat ($Ce_2(SO_4)_3$). In anderen Worten enthält die Lösung B zum Beispiel gelöstes Cersulfat.

Zum Beispiel lässt sich für den Fall, dass die Lösung B Cer(III)-Sulfat ($Ce_2(SO_4)_3$) enthält, die Fällungsreaktion mit folgender Reaktionsgleichung (1) veranschaulichen:

$$Ce_2(SO_4)_3 + 6\ F^- \rightarrow 2\ CeF_3 + 3\ SO_4^{2-} \qquad (1)$$

In einer beispielhaften Ausführungsform ist nach dem Zugeben der Lösung B zu der zinkhaltigen Lösung bzw. Suspension A der pH-Wert eines so erhaltenen Gemisches im Bereich von 5,0 bis 5,5 gepuffert. In solch einem schwach sauren bis neutralen Milieu kann die Ausfällung der Fluoridionen mittels des Seltenerdelementsalzes in besonders effektiver Weise durchgeführt werden und insbesondere ist es möglich, in diesem Milieu eine nahezu quantitative bzw. weitgehend vollständige Ausfällung der Fluoridionen zu erreichen.

Eine Pufferung des pH-Werts auf einen Bereich von 5,0 bis 5,5 kann beispielsweise mittels Zugabe von Zinkoxid (ZnO) als Puffersubstanz erfolgen, insbesondere wenn die zinkhaltige Lösung bzw. Suspension A aus einer zinkoxidhaltigen Zusammensetzung durch zumindest teilweises Lösen mittels einer Säure gebildet wurde und somit eher einen saureren pH-Wert als pH 5,0 bis 5,5 aufweist. Das Zinkoxid wird hierbei zum Beispiel zu der zinkhaltigen Lösung bzw. Suspension A, zu der Lösung B und/oder zu dem erhaltenen Gemisch zugegeben. Die Zugabe von Zinkoxid kann dabei solange erfolgen, bis sich ein pH-Wert im gewünschten Bereich einstellt. Das Zinkoxid kann zum Beispiel in Form einer frisch bereiteten, fluoridfreien Zinkoxidmilch zugegeben werden. In manchen Ausführungsformen ist es vorteilhaft, das Zinkoxid in einem geringen Überschuss anzuwenden. Hierdurch ist es im Allgemeinen möglich, die Filtrierbarkeit des Seltenerdelementfluorids, das stets sehr feinteilig und somit schwer filtrierbar ist, zu verbessern.

Alternativ ist auch die Pufferung des pH-Werts mittels anderer Puffersubstanzen, zum Beispiel basischem Zinkcarbonat möglich, solange die Puffersubstanzen die Fällung des Seltenerdelementfluorids nicht negativ beeinflussen und bei der Weiterverarbeitung bzw. Weiterbenutzung der zinkhaltigen Lösung C und/oder des Feststoffs nicht stören.

In einer beispielhaften Ausführungsform wird die Zugabe der Lösung B und somit auch die einsetzende Fällung des Seltenerdelementfluorids bei einer erhöhten Temperatur, insbesondere im Bereich von 70 bis 85 °C, insbesondere im Bereich von 75 bis 84 °C, insbesondere im Bereich von 77 bis 83 °C, insbesondere bei etwa 80 °C durchgeführt. Dies ist vorteilhaft im Hinblick auf eine gute Abtrennbarkeit, insbesondere Filtrierbarkeit, des gebildeten Feststoffs.

In manchen Ausführungsformen ist es vorteilhaft, wenn die Zugabe der Lösung B zu der zinkhaltigen Lösung bzw. Suspension A langsam, zum Beispiel in kleinen Mengen und unter ständigem Rühren erfolgt. Insbesondere ist es hierdurch möglich, die Keimbildungsgeschwindigkeit zurückzudrängen und die Kristallwachstumsgeschwindigkeit zu begünstigen.

In manchen Ausführungsformen ist es vorteilhaft, wenn der Feststoff, der ein Seltenerdelementfluorid umfasst, wie zum Beispiel das ausgefällte Cerfluorid ($CeF_3$) bei im Wesentlichen gleichbleibender Temperatur, zum Beispiel bei einer Temperatur im Bereich von 70 bis 85 °C, insbesondere von 75 bis 80 °C, und ständigem Rühren einem Reifeprozess bzw. Alterungsprozess unterzogen wird, zum Beispiel über einen Zeitraum von 30 Minuten bis 4 Stunden, insbesondere von 1 bis 3 Stunden, und erst nach einem weiteren Zeitraum von zum Beispiel 12 bis 18 Stunden, insbesondere 14 bis 16 Stunden, währenddessen der Feststoff und die zinkhaltige Lösung C abkühlen gelassen wird, ein Abtrennen des Feststoffs von der zinkhaltigen Lösung C gemäß Schritt (iii) durchgeführt wird. Durch den Reifeprozess bzw. Alterungsprozess vergröbern sich die Kristalle des Feststoffs. Dadurch wird die Abtrennung des Feststoffs von der zinkhaltigen Lösung C insbesondere mittels Filtration durch ein (feinporiges) Filter erleichtert.

In einer beispielhaften Ausführungsform sind in der zinkhaltigen Lösung bzw. Suspension A und/oder der Lösung B geringe Mengen (zum Beispiel Spuren) an $Fe^{3+}$-Ionen vorhanden oder werden dieser zugesetzt, insbesondere in Form von Eisen(III)-Sulfat ($Fe_2(SO_4)_3$). Hierdurch ist es möglich, das Sedimentationsverhalten des (kryptokristallin bis amorph) ausfallenden Seltenerdfluorids, wie zum Beispiel Cerfluorid, zu erleichtern, insbesondere dessen Filtrierbarkeit zu verbessern. Ohne an eine Theorie gebunden sein zu wollen, gehen die vorliegenden Erfinder davon aus, dass das Eisen(III)-Sulfat in einer schwach sauren Fällungsmischung hydrolysiert und dabei basische Eisen(III)-Sulfate bildet, die die Seltenerdfluorid-Partikel, insbesondere die $CeF_3$-Partikel, einhüllen und auf diese Weise leichter zur Sedimentation bringen. In einer beispielhaften Ausführungsform werden $Fe^{3+}$-Ionen, insbesondere basisches Eisen(III)-Sulfat ($Fe_2O(SO_4)_2$), auch aus in der zinkhaltigen Lösung bzw. Suspension A und/oder der Lösung B in Spuren vorhandenem zweiwertigen Eisen durch Oxidation, zum Beispiel mittels Wasserstoffperoxid ($H_2O_2$), gebildet, z.B. durch Zugabe einiger Tropfen Perhydrol (33 %-iges $H_2O_2$) zu der zinkhaltigen Lösung bzw. Suspension A und/oder der Lösung B, wie anhand der folgenden Reaktionsgleichung (2) veranschaulicht:

$$2\ Fe(SO_4) + H_2O_2 \rightarrow Fe_2O(SO_4)_2 + H_2O \qquad (2)$$

Die zinkhaltige Lösung C weist eine wesentlich niedrigere Konzentration an Fluoridionen auf als die zinkhaltige Lösung bzw. Suspension A.

In einer beispielhaften Ausführungsform weist die zinkhaltige Lösung bzw. Suspension A einen Gehalt an Fluorid von mindestens 17 mg/l auf, insbesondere mindestens 25 mg/l, insbesondere mindestens 50 mg/l. Bei solch einer fluorbelasteten zinkhaltigen Lösung bzw. Suspension kann es zu massiven Problemen kommen, wenn sie bei der hydrometallurgischen Gewinnung von Zink als Elektrolyt eingesetzt wird. Insbesondere besteht hierbei das Risiko, dass ein störungsfreies Strippen des auf einer Kathode im Verlauf der Elektrolyse abgeschiedenen Zink-Überzugs nicht möglich ist bzw. das Strippen extrem erschwert ist.

In einer beispielhaften Ausführungsform weist die zinkhaltige Lösung C einen Gehalt an Fluorid von höchstens 10 mg/l auf, insbesondere höchstens 8 mg/l, insbesondere höchstens 6 mg/l. Hierdurch ist es möglich, dass sichergestellt ist, dass die oben im Zusammenhang mit dem Einsatz einer fluorbelasteten zinkhaltigen Lösung bzw. Suspension beschriebenen Probleme und Nachteile weitgehend vermieden werden.

Bei dem Verfahren zum Entfernen von Fluorid aus einer zinkhaltigen Lösung bzw. Suspension wird in einem weiteren Verfahrensschritt (Schritt (iii)) der gebildete Feststoff, der ein Seltenerdelementfluorid umfasst, von der zinkhaltigen Lösung C durch zum Beispiel Filtration oder Zentrifugierung abgetrennt.

In einer beispielhaften Ausführungsform wird das Abtrennen des Feststoffs von der zinkhaltigen Lösung C so durchgeführt, dass anschließend sowohl die zinkhaltige Lösung C als auch der ein Seltenerdelementfluorid enthaltende Feststoff weiterverarbeitet werden können. Dies ist insbesondere aus Kostengründen aber auch zur Einsparung von Ressourcen und somit aus Gründen des Umweltschutzes von Vorteil.

In einer beispielhaften Ausführungsform umfasst das Abtrennen des Feststoffs von der zinkhaltigen Lösung C mindestens einen Filtrationsvorgang. Hierdurch kann in besonders einfacher und effizienter Weise der Feststoff von der zinkhaltigen Lösung C abgetrennt werden und dabei sowohl die zinkhaltige Lösung C als auch der ein Seltenerdelementfluorid enthaltende Feststoff einer Weiterverarbeitung bzw. einer Weiterverwendung zur Verfügung stehen. Der Filtrationsvorgang unterliegt keinen besonderen Beschränkungen. Insbesondere kann die Porengröße der verwendeten Filter in Abhängigkeit der Partikelgröße des Feststoffs ausgewählt werden, um somit ein weitestgehend vollständiges Zurückhalten des Feststoffs bei akzeptabler Durchflussrate der Lösung zu erzielen. Alternativ kann das Abtrennen des Feststoffs von der zinkhaltigen Lösung C auch zum Beispiel mittels Zentrifugieren, Absetzenlassen und/oder Dekantieren durchgeführt werden.

Die nach Schritt (iii) erhaltene zinkhaltige Lösung C ist in der Regel weitestgehend befreit von Feststoffen oder Trübungen und stellt insbesondere eine im Wesentlichen klare Lösung dar mit einem - abgesehen von Verdünnungseffekten - im Wesentlichen unveränderten Gehalt an Zink gegenüber der zinkhaltigen Lösung bzw. Suspension A, aber mit einem reduzierten Gehalt an Fluoriden. Man kann somit bei der zinkhaltigen Lösung C von einer entfluorierten zinkhaltigen Lösung C, insbesondere einer entfluorierten Zinksulfat-Lösung sprechen.

Bevor auf eine mögliche Weiterverarbeitung bzw. Verwendung der so erhaltenen entfluoridierten zinkhaltigen Lösung C eingegangen wird (s. hierzu weiter unten), wird im Folgenden zunächst die mögliche Weiterverarbeitung bzw. Weiterverwendung des abgetrennten, ein Seltenerdelementfluorid enthaltenden Feststoffs beschrieben.

In einer beispielhaften Ausführungsform wird aus dem abgetrennten Feststoff ein Salz eines Seltenerdelements gebildet, das für die Lösung B wiederverwendet werden kann. Somit kann das in Schritt B eingesetzte Salz eines Seltenerdelements immer wieder verwendet werden, und es ist somit möglich, dass das eingesetzte Salz eines Seltenerdelements nicht verbraucht wird, sondern einem Kreislauf unterliegt. Dies ist insbesondere aus Kostengründen aber auch zur Einsparung von Ressourcen und somit aus Gründen des Umweltschutzes von enormem Vorteil.

Insbesondere wird in einer beispielhaften Ausführungsform der abgetrennte, ein Seltenerdelementfluorid enthaltende Feststoff mit einer Säure, wie zum Beispiel Schwefelsäure, die auch als Verdrängungssäure bezeichnet werden kann, umgesetzt, wodurch aus dem Seltenerdelementfluorid ein Salz eines Seltenerdelements, wie zum Beispiel ein Sulfat eines Seltenerdelements, gebildet wird, das für die Lösung B wiederverwendet werden kann. Eventuell auch in dem abgetrennten Feststoff enthaltenes Zinkoxid geht hierbei auch in Lösung, zum Beispiel in Form von Zinksulfat, und kann als solches auch zu der Lösung B zugegeben werden. Gleiches gilt für etwaige in dem abgetrennten Feststoff enthaltene Eisensalze, die zum Beispiel in Form von Eisensulfat in Lösung gehen und als solche auch zu der Lösung B zugegeben werden können. In einer beispielhaften Ausführungsform wird der abgetrennte Feststoff mit halbkonzentrierter Schwefelsäure (z.B. mit einem Gehalt von ca. 40 bis 60 Gew.-% $H_2SO_4$) unter Erwärmen umgesetzt.

Die folgende Reaktionsgleichung (3) veranschaulicht die beispielhafte Umsetzung von Cerfluorid ($CeF_3$) mit Schwefelsäure:

$$2\ CeF_3 + 3\ H_2SO4 \rightarrow Ce_2(SO_4)_3 + 6\ HF \qquad (3)$$

Wie aus der Reaktionsgleichung (3) ersichtlich ist, entsteht neben dem für die Lösung B wiederverwendbaren Salz eines Seltenerdelements (im vorliegenden Beispiel Cer(III)-Sulfat) auch Fluorwasserstoff (HF), der gewonnen werden kann.

Die vorliegende Erfindung betrifft daher auch ein Verfahren zur Herstellung von Fluorwasserstoff bzw. Flusssäure, wobei das Verfahren die folgenden Schritte umfasst:

- Durchführen eines erfindungsgemäßen Verfahrens zum Entfernen von Fluorid aus einer zinkhaltigen Lösung bzw. Suspension;
- Behandeln des Feststoffs, der ein Seltenerdelementfluorid umfasst, mit einer Säure, insbesondere Schwefelsäure, wobei Fluorwasserstoff (HF) und eine Lösung eines Salzes, insbesondere eines Sulfats, des Seltenerdelements gebildet werden;
- Abtrennen des Fluorwasserstoffs (HF) von der Lösung des Salzes des Seltenerdelements.

In einer beispielhaften Ausführungsform umfasst das Abtrennen des Fluorwasserstoffs (HF) von der Lösung des Salzes des Seltenerdelements einen Destillationsvorgang. Hierbei wird der Fluorwasserstoff als Fluorwasserstoffdampf abdestilliert und in einer Wasser enthaltenden Vorlage unter Erhalt von Flusssäure aufgefangen. Auf Grund der sehr aggressiven und stark ätzenden Natur von Fluorwasserstoff bzw. Flusssäure ist es vorteilhaft, wenn die Destillationsvorrichtung aus einem gegenüber Fluorwasserstoff bzw. Flusssäure beständigem Material gemacht ist, wie zum Beispiel aus Teflon (Polytetrafluorethylen).

Fluorwasserstoff bzw. Flusssäure stellt eine vielfältig verwendbare Chemikalie dar, die somit gewinnbringend abgesetzt werden kann.

In einer beispielhaften Ausführungsform wird die abgetrennte Lösung des Salzes des Seltenerdelements als ein Bestandteil der Lösung B wiederverwendet, wodurch ein weitestgehend geschlossener Kreislauf in Bezug auf das Salz des Seltenerdelements verwirklicht werden kann.

Wie oben bereits angekündigt, kann auch die entfluoridierte zinkhaltige Lösung C, insbesondere eine entfluoridierte Zinksulfat-Lösung, weiterverarbeitet bzw. verwendet werden.

In einer beispielhaften Ausführungsform weist die entfluoridierte Zinksulfat-Lösung einen Gehalt an Fluorid von höchstens 9 mg/l auf, insbesondere höchstens 8 mg/l, insbesondere höchstens 7,5 mg/l, insbesondere höchstens 7 mg/l, insbesondere höchstens 6 mg/l.

Die Untergrenze des Gehalts an Fluorid hängt insbesondere von der Löslichkeit des im Verlauf des Verfahrens gebildeten Seltenerdelementfluorids ab, wie oben im Zusammenhang mit der nahezu quantitativen bzw. weitgehend vollständigen Ausfällung der Fluoridionen im Detail beschrieben wurde, wobei nach dem Abtrennen des Seltenerdelementfluorids durch Verdünnen der Zinksulfat-Lösung mit Wasser selbstverständlich auch Fluorid-Gehalte unterhalb der sich aus dem Löslichkeitsprodukt rechnerisch ergebenden Löslichkeit möglich sind. Zum Beispiel beträgt die Löslichkeit von Cerfluorid ($CeF_3$) 4,22 mg/l. In einer beispielhaften Ausführungsform weist die entfluoridierte Zinksulfat-Lösung dann einen Gehalt an Fluorid von mindestens 1 mg/l auf, insbesondere mindestens 2 mg/l, insbesondere mindestens 3 mg/l, insbesondere mindestens 4 mg/l, insbesondere mindestens 4,5 mg/l.

Die entfluoridierte Zinksulfat-Lösung kann in vielfältiger Weise weiterverarbeitet bzw. eingesetzt werden, zum Beispiel in der Düngemittelindustrie, in Fallbädern der Viscoseseide-Industrie oder Futtermittelindustrie bzw. bei der Herstellung von Düngemitteln, Viscoseseide oder Futtermitteln und zur (insbesondere hydrometallurgischen) Herstellung von Zink.

Die vorliegende Erfindung betrifft auch ein Verfahren zur Herstellung von Zink aus einer zinkoxidhaltigen Zusammensetzung, insbesondere von Wälzoxid, wobei das Verfahren die folgenden Schritte umfasst:

- Bereitstellen einer Vorrichtung, die zur hydrometallurgischen Gewinnung von Zink konfiguriert ist;
- Durchführen eines erfindungsgemäßen Verfahrens zum Entfernen von Fluorid aus einer zinkhaltigen Lösung bzw. Suspension in einer weiteren Vorrichtung;
- Durchführen einer hydrometallurgischen Gewinnung von Zink aus der zinkhaltigen Lösung C mittels der zur hydrometallurgischen Gewinnung von Zink konfigurierten Vorrichtung.

Um den hydrometallurgischen Zink-Gewinnungsprozess nicht zu behindern, wird die Fluoridentfernung in einer separaten Vorrichtung, zum Beispiel einem separaten beheizbaren Rührbehälter, im Nebenschluss durchgeführt.

Die vorliegende Erfindung wird weiterhin an Hand der folgenden Beispiele beschrieben, die aber lediglich der Verdeutlichung der erfindungsgemäßen Lehren dienen und in keiner Weise den Umfang der vorliegenden Erfindung beschränken sollen.

**Beispiele**

Aus gewaschenem Wälzoxid mit der in nachstehender Tabelle 2 angegebenen Zusammensetzung wurde durch Neutrallaugung mit verdünnter (15 %-iger) Schwefelsäure eine Stammlösung mit einem Zinkgehalt von 45 g/l hergestellt.

Tabelle 2: Zusammensetzung des für die Entfluoridierungsversuche eingesetzten Wälzoxids

| Bestandteil | Gehalt [Gew.-%] | Bestandteil | Gehalt [Gew.-%] |
|---|---|---|---|
| F | 0,24 | Mg | 0,18 |
| Cl | 0,1 | Mn | 0,22 |
| $SO_4$ | 0,44 | Pb | 4,8 |
| Ca | 1,1 | Zn | 67,0 |
| Fe | 2,8 | Si | 0,22 |

Diese Zinkkonzentration wurde durch Umsetzung von 79,017 g Wälzoxid mit 450,06 g $H_2SO_4$ (15 %-ig), d.s. 409,1 ml eingestellt.

Dabei gingen 85% des Zinkoxids der vorgelegten Wälzoxidmenge in Lösung. Diese Laugung entspricht einer Neutrallaugung mit einem End-pH-Wert von 4. Unter diesen Laugungsbedingungen wurde eine teilweise Mitauflösung von Silikaten (aus Gangartanteilen unter Bildung von kolloidaler Kieselsäure, die die Filterporen verstopft und so den Filtrationsprozess nach der Neutrallaugung behindert) vermieden. Während der Neutrallaugung wurde die Suspension laufend gerührt. Die Laugungstemperatur betrug 65 °C, die Laugungszeit 40 Minuten. Das Ende der Neutrallaugung konnte an der pH-Konstanz erkannt werden.

Nach Beendigung der Neutrallaugung wurde der Neutrallaugungsrückstand von der Mutterlauge durch Filtration getrennt. Das farblose und klare Filtrat wurde in einen 1-Liter-Messkolben überführt und mit Wasser bis zur Messmarke verdünnt. Der Inhalt des 1-Liter-Messkolbens wurde in zwei 500 ml Messkolben überführt.

Der Inhalt des einen 500 ml Messkolbens diente zur Bestimmung des Zink- und des Fluorgehalts der Stammlösung, der Inhalt des zweiten 500 ml Messkolbens wurde in ein 800 ml Becherglas überführt und langsam, tropfenweise, mit einer geringfügig überstöchiometrischen Menge an Cer(III)-Nitrat, gelöst in ca. 50 ml Wasser, versetzt. Die stöchiometrisch erforderliche $Ce(NO_3)_3 \cdot 6H_2O$-Menge wurde aus dem Fluorgehalt des Wälzoxids wie folgt errechnet:

$$(0,24/100) \times 79,017 \times 0,5 = 0,09482 \text{ g oder } 94,82 \text{ mg Fluor}$$

Diese Fluormenge benötigt:

$$94,82 \times (434,22/56,995) = 722,4 \text{ mg } Ce(NO_3)_3 \cdot 6H_2O$$

Zahlenerklärung:

0,24 = Fluorgehalt des Wälzoxides [Gew.-%]
434,22 = Molmasse von $Ce(NO_3)_3 \cdot 6H_2O$ [g/mol]
79,017 = Wälzoxideinwaage [g]
56,995 = 3-fache Molmasse von Fluor [g/mol]

Während des Zutropfens der $Ce(NO_3)_3$-Lösung trübte sich die Lösung durch ausgefallenes Cer(III)-Fluorid. Um dieses besser zur Sedimentation zu bringen, wurde die Suspension mit wenigen Tropfen Perhydrol ($H_2O_2$, 33 %-ig) versetzt. Dabei oxidierte das spurenweise in der Suspension vorhandene 2-wertige Eisen unter Bildung von basischem Eisen(III)-Sulfat gemäß der Reaktionsgleichung (2).

Nachdem basisches Eisen(III)-Sulfat zur Hydrolyse neigt und dabei Schwefelsäure bildet, wurde der Suspension noch wenig basisches Zinkcarbonat zugesetzt. Dadurch wurde der leicht abgesunkene pH-Wert wieder auf den Wert von 5 angehoben.

Die so erhaltene Suspension wurde für 2 Stunden bei einer Temperatur von 70 bis 80 °C gerührt und danach erst zur Abkühlung gebracht. Für die Sedimentation des Niederschlages wurde eine Stehzeit von rund 14 Stunden anberaumt. Danach erst wurde der durch FeO(OH) bräunlich gefärbte Niederschlag abfiltriert und mit kaltem Wasser gewaschen.

Das Filtrat wurde wieder in einen 500 ml Messkolben überführt und mit Wasser bis zur Messmarke verdünnt. Danach wurden wieder die Zink- und Fluorgehalte der so erhaltenen Lösung bestimmt. Nach dem voranstehend beschriebenen Präparations- und Messschema wurden insgesamt 3 Entfluoridierungsversuche durchgeführt. Die Ergebnisse der Messungen können der nachstehenden Tabelle 3 entnommen werden.

Tabelle 3: Ergebnisse der Entfluoridierungsversuche durch Ausfällung der Fluoridionen aus einer Zinksulfat-Lösung mittels $Ce^{3+}$-Ionen

| Versuch 1 | Gehalt der Zinksulfat-Lösung | |
|---|---|---|
| | Vor der Fällung | Nach der Fällung |
| Zn | 48,1 g/l | 45,8 g/l |
| F | 54,0 mg/l | 6,0 mg/l |
| Versuch 2 | Gehalt der Zinksulfat-Lösung | |
| | Vor der Fällung | Nach der Fällung |
| Zn | 48,4 g/l | 48,4 g/l |
| F | 59,0 mg/l | 4,0 mg/l |
| Versuch 3 | Gehalt der Zinksulfat-Lösung | |
| | Vor der Fällung | Nach der Fällung |
| Zn | 50 g/l | 49,8 g/l |
| F | 63 mg/l | 4,5 mg/l |

Wie aus den Messergebnissen ersichtlich ist, werden durch die Fluoridfällung die Zinkgehalte der Messlösungen nicht wesentlich beeinflusst. Die Zinkgehalte der Messlösungen sind vor und nach der Fluoridfällung im Wesentlichen die gleichen.

Die Fluoridgehalte der zu entfluoridierenden Messlösungen lassen sich hingegen durch Zugabe einer stöchiometrischen (oder einer leicht überstöchiometrischen) Menge an $Ce^{3+}$-Ionen in schwach saurer bis neutraler Lösung markant absenken. Wegen des Neutralsalzeffektes wird zwar nicht immer die über das Löslichkeitsprodukt errechenbare Gleichgewichtslöslichkeit erreicht, doch werden End-Fluoridgehalte erzielt, die bei einer hydrometallurgischen Zink-Gewinnung ein störungsfreies Abziehen der Zinküberzüge von den Al-Kathoden ermöglichen.

Es ist somit mit Hilfe des erfindungsgemäßen Verfahrens zum Entfernen von Fluorid aus einer zinkhaltigen Lösung bzw. Suspension möglich, fluoridhaltige Zink-Sekundärrohstoffe, wie zum Beispiel gewaschenes Wälzoxid, für die hydrometallurgische Zink-Gewinnung aufzubereiten und einzusetzen.

Die vorliegende Erfindung wurde an Hand spezifischer Ausführungsformen und Beispiele beschrieben. Die Erfindung ist aber nicht hierauf beschränkt und verschiedene Modifikationen hiervon sind möglich, ohne den Umfang der vorliegenden Erfindung, wie in den anhängigen Ansprüchen definiert, zu verlassen.

## Patentansprüche

1. Verfahren zum Entfernen von Fluorid aus einer zinkhaltigen Lösung bzw. Suspension, insbesondere einer Zinksulfat-Lösung, wobei das Verfahren die folgenden Schritte umfasst:

   (i) Bereitstellen einer zinkhaltigen Lösung bzw. Suspension A, wobei die zinkhaltige Lösung bzw. Suspension A ferner Fluoridionen enthält;
   (ii) Zugeben einer Lösung B, die ein gelöstes Salz eines Seltenerdelements enthält, zu der zinkhaltigen Lösung bzw. Suspension A, wobei ein Feststoff, der ein Seltenerdelementfluorid umfasst, und eine zinkhaltige Lösung C gebildet werden;
   (iii) Abtrennen des Feststoffs von der zinkhaltigen Lösung C, wobei die zinkhaltige Lösung C eine niedrigere Konzentration an Fluoridionen aufweist als die zinkhaltige Lösung bzw. Suspension A.

2. Verfahren nach Anspruch 1, wobei die zinkhaltige Lösung bzw. Suspension A durch zumindest teilweises Lösen einer zinkoxidhaltigen Zusammensetzung, insbesondere von Wälzoxid, gebildet wird, wobei die zinkoxidhaltige Zusammensetzung vorzugsweise mittels einer Säure, insbesondere Schwefelsäure, zumindest teilweise gelöst wird unter Bildung der zinkhaltigen Lösung bzw. Suspension A.

3. Verfahren nach Anspruch 1 oder 2, wobei die Lösung B ein gelöstes Sulfat eines Seltenerdelements, insbesondere Cersulfat, enthält.

4. Verfahren nach einem der vorhergehenden Ansprüche, wobei das Seltenerdelement ausgewählt ist aus der Gruppe, bestehend aus Lanthan (La), Cer (Ce), Praseodym (Pr) und Neodym (Nd), wobei das Seltenerdelement vorzugsweise Cer (Ce) umfasst.

5. Verfahren nach einem der vorhergehenden Ansprüche, wobei in Schritt (ii) eine Stoffmenge an dem gelösten Salz eines Seltenerdelements zugegeben wird, die an eine abgeschätzte oder zuvor ermittelte Stoffmenge an Fluoridionen in der zinkhaltigen Lösung bzw. Suspension A angepasst ist.

6. Verfahren nach einem der vorhergehenden Ansprüche, wobei nach Zugeben der Lösung B zu der zinkhaltigen Lösung bzw. Suspension A der pH-Wert eines so erhaltenen Gemisches im Bereich von 5,0 bis 5,5 gepuffert ist, insbesondere mittels Zugabe von Zinkoxid (ZnO).

7. Verfahren nach einem der vorhergehenden Ansprüche,

wobei das Abtrennen des Feststoffs von der zinkhaltigen Lösung C so durchgeführt wird, dass anschließend sowohl die zinkhaltige Lösung C als auch der Feststoff weiterverarbeitet werden können; und/oder
wobei das Abtrennen des Feststoffs von der zinkhaltigen Lösung C mindestens einen Filtrationsvorgang umfasst.

8. Verfahren nach einem der vorhergehenden Ansprüche,

wobei die zinkhaltige Lösung bzw. Suspension A einen Gehalt an Fluorid von mindestens 17 mg/l aufweist; und/oder
wobei die zinkhaltige Lösung C einen Gehalt an Fluorid von höchstens 10 mg/l aufweist.

9. Verfahren nach einem der vorhergehenden Ansprüche, wobei aus dem abgetrennten Feststoff ein Salz eines Seltenerdelements gebildet wird, das für die Lösung B wiederverwendet werden kann.

10. Verfahren zur Herstellung von Zink aus einer zinkoxidhaltigen Zusammensetzung, insbesondere von Wälzoxid, wobei das Verfahren die folgenden Schritte umfasst:

- Bereitstellen einer Vorrichtung, die zur hydrometallurgischen Gewinnung von Zink konfiguriert ist;
- Durchführen eines Verfahrens zum Entfernen von Fluorid aus einer zinkhaltigen Lösung bzw. Suspension gemäß einem der Ansprüche 1 bis 9 in einer weiteren Vorrichtung;
- Durchführen einer hydrometallurgischen Gewinnung von Zink aus der zinkhaltigen Lösung C mittels der zur hydrometallurgischen Gewinnung von Zink konfigurierten Vorrichtung.

11. Verfahren zur Herstellung von Fluorwasserstoff bzw. Flusssäure, wobei das Verfahren die folgenden Schritte umfasst:

- Durchführen eines Verfahrens zum Entfernen von Fluorid aus einer zinkhaltigen Lösung bzw. Suspension gemäß einem der Ansprüche 1 bis 9;
- Behandeln des Feststoffs, der ein Seltenerdelementfluorid umfasst, mit einer Säure, insbesondere Schwefelsäure, wobei Fluorwasserstoff (HF) und eine Lösung eines Salzes, insbesondere eines Sulfats, des Seltenerdelements gebildet werden;
- Abtrennen des Fluorwasserstoffs (HF) von der Lösung des Salzes des Seltenerdelements.

12. Verfahren nach Anspruch 11,
wobei das Abtrennen des Fluorwasserstoffs (HF) von der Lösung des Salzes des Seltenerdelements mindestens einen Destillationsvorgang umfasst; und/oder wobei die abgetrennte Lösung des Salzes des Seltenerdelements als ein Bestandteil der Lösung B wiederverwendet wird.

**Claims**

1. Method for removing fluoride from a zinc-containing solution or suspension, in particular a zinc sulfate solution, wherein the method encompasses the following steps:

(i) providing a zinc-containing solution or suspension A, wherein the zinc-containing solution or suspension A further contains fluoride ions;

(ii) adding a solution B which contains a dissolved salt of a rare earth element to the zinc-containing solution or suspension A, wherein a solid matter which encompasses a rare earth element fluoride and a zinc-containing solution C are formed;

(iii) separating the solid matter from the zinc-containing solution C,

wherein the zinc-containing solution C comprises a lower concentration of fluoride ions than the zinc-containing solution or suspension A.

2. Method according to claim 1, wherein the zinc-containing solution or suspension A is formed by at least partially solving a zinc oxide-containing composition, in particular waelz oxide, wherein the zinc oxide-containing composition is at least partially solved, preferably by an acid, in particular sulfuric acid, under formation of the zinc-containing solution or suspension A.

3. Method according to claim 1 or 2, wherein the solution B contains a dissolved sulfate of a rare earth element, in particular cerium sulfate.

4. Method according to one of the preceding claims, wherein the rare earth element is selected from the group consisting of lanthanum (La), cerium (Ce), praseodymium (Pr), and neodymium (Nd), wherein the rare earth element preferably encompasses cerium (Ce).

5. Method according to one of the preceding claims, wherein in the step (ii) an amount of substance of the dissolved salt of a rare earth element is added which is adapted to an estimated or previously determined amount of substance of fluoride ions in the zinc-containing solution or suspension A.

6. Method according to one of the preceding claims, wherein, after adding the solution B to the zinc-containing solution or suspension A, the pH value of a such obtained mixture is buffered in the range from 5,0 to 5,5, in particular by adding zinc oxide (ZnO).

7. Method according to one of the preceding claims,

wherein separating the solid matter from the zinc-containing solution C is performed such that subsequently both the zinc-containing solution C and the solid matter may be further processed; and/or

wherein separating the solid matter from the zinc-containing solution C encompasses at least one filtration process.

8. Method according to one of the preceding claims,

wherein the zinc-containing solution or suspension A comprises an amount of fluoride of at least 17 mg/L; and/or

wherein the zinc-containing solution C comprises an amount of fluoride of maximum 10 mg/L.

9. Method according to one of the preceding claims, wherein a salt of a rare earth element is formed from the separated solid matter, which salt may be reused for the solution B.

10. Method for manufacturing zinc from a zinc oxide-containing composition, in particular waelz oxide, wherein the method encompasses the following steps:

- providing a device which is configured for a hydrometallurgical recovery of zinc;
- performing a method for removing fluoride from a zinc-containing solution or suspension according to one of the claims 1 to 9 in a further device;
- performing a hydrometallurgical recovery of zinc from the zinc-containing solution C by the device which is configured for the hydrometallurgical recovery of zinc.

11. Method for manufacturing hydrogen fluoride or hydrofluoric acid, wherein the method encompasses the following steps:

- performing a method for removing fluoride from a zinc-containing solution or suspension according to one of the claims 1 to 9;

- treating the solid matter which encompasses a rare earth element fluoride with an acid, in particular sulfuric acid, wherein hydrogen fluoride (HF) and a solution of a salt, in particular a sulfate, of the rare earth element are formed;
separating the hydrogen fluoride (HF) from the solution of the salt of the rare earth element.

12. Method according to claim 11,
wherein separating the hydrogen fluoride (HF) from the solution of the salt of the rare earth element encompasses at least one distillation process; and/or wherein the separated solution of the salt of the rare earth element is reused as a constituent of the solution B.

**Revendications**

1. Procédé d'élimination de fluorure d'une solution ou d'une suspension contenant du zinc, en particulier d'une solution de sulfate de zinc, dans lequel le procédé comprend les étapes suivantes :

   (i) la fourniture d'une solution ou suspension A contenant du zinc, dans lequel la solution ou suspension A contenant du zinc contient en outre des ions fluorure ;
   (ii) l'ajout d'une solution B, qui contient un sel dissous d'un élément de terre rare, à la solution ou suspension A contenant du zinc, dans lequel une matière solide, qui comprend un fluorure d'élément de terre rare, et une solution C contenant du zinc sont obtenues ;
   (iii) la séparation de la matière solide de la solution C contenant du zinc,
   dans lequel la solution C contenant du zinc présente une concentration en ions fluorure plus basse que la solution ou suspension A contenant du zinc.

2. Procédé selon la revendication 1, dans lequel la solution ou suspension A contenant du zinc est obtenue par une dissolution au moins partielle d'une composition contenant de l'oxyde de zinc, en particulier d'oxyde Waelz, dans lequel la composition contenant de l'oxyde de zinc est dissoute au moins en partie de préférence au moyen d'un acide, en particulier d'un acide sulfurique, en obtenant la solution ou suspension A contenant du zinc.

3. Procédé selon la revendication 1 ou 2, dans lequel la solution B contient un sulfate dissous d'un élément de terre rare, en particulier du sulfate de cérium.

4. Procédé selon l'une quelconque des revendications précédentes, dans lequel l'élément de terre rare est choisi parmi le groupe constitué de lanthane (La), de cérium (Ce), de praséodyme (Pr) et de néodyme (Nd), dans lequel l'élément de terre rare comprend de préférence du cérium (Ce) .

5. Procédé selon l'une quelconque des revendications précédentes, dans lequel lors de l'étape (ii), une quantité de matière en sel dissous d'un élément de terre rare est ajoutée, qui est adaptée à une quantité de matière évaluée ou déterminée au préalable d'ions fluorure dans la solution ou suspension A contenant du zinc.

6. Procédé selon l'une quelconque des revendications précédentes, dans lequel après ajout de la solution B à la solution ou suspension A contenant du zinc, la valeur pH d'un mélange ainsi obtenu est tamponnée dans la plage de 5,0 à 5,5, en particulier au moyen de l'ajout d'oxyde de zinc (ZnO).

7. Procédé selon l'une quelconque des revendications précédentes,

   dans lequel la séparation de la matière solide de la solution C contenant du zinc est mise en œuvre de telle sorte qu'ensuite à la fois la solution C contenant du zinc et la matière solide peuvent être traitées ultérieurement ; et/ou
   dans lequel la séparation de la matière solide de la solution C contenant du zinc comprend au moins un processus de filtration.

8. Procédé selon l'une quelconque des revendications précédentes,

   dans lequel la solution ou suspension A contenant du zinc présente une teneur en fluorure d'au moins 17 mg/l ; et/ou
   dans lequel la solution C contenant du zinc présente une teneur en fluorure de 10 mg/l au maximum.

9. Procédé selon l'une quelconque des revendications précédentes, dans lequel est obtenu à partir de la matière solide séparée un sel d'un élément de terre rare, qui peut être réutilisé pour la solution B.

10. Procédé de fabrication de zinc à partir d'une composition contenant de l'oxyde de zinc, en particulier d'oxyde Waelz, dans lequel le procédé comprend les étapes suivantes :

- de fourniture d'un dispositif, qui est configuré pour l'obtention par hydrométallurgie de zinc ;
- de mise en œuvre d'un procédé d'élimination de fluorure d'une solution ou suspension contenant du zinc selon l'une quelconque des revendications 1 à 9 dans un autre dispositif ;
- de mise en œuvre d'une obtention par hydrométallurgie de zinc de la solution C contenant du zinc au moyen du dispositif configuré pour l'obtention par hydrométallurgie de zinc.

11. Procédé de fabrication de fluorure d'hydrogène ou d'acide fluorhydrique, dans lequel le procédé comprend les étapes suivantes :

- de mise en œuvre d'un procédé d'élimination de fluorure d'une solution ou suspension contenant du zinc selon l'une quelconque des revendications 1 à 9 ;
- de traitement de la matière solide, qui comprend un fluorure d'élément de terre rare, avec un acide, en particulier de l'acide sulfurique, dans lequel le fluorure d'hydrogène (HF) et une solution d'un sel, en particulier d'un sulfate, de l'élément de terre rare sont obtenus ;
- de séparation du fluorure d'hydrogène (HF) de la solution du sel de l'élément de terre rare.

12. Procédé selon la revendication 11,

dans lequel la séparation du fluorure d'hydrogène (HF) de la solution du sel de l'élément de terre rare comprend au moins un processus de distillation ; et/ou

dans lequel la solution séparée du sel de l'élément de terre rare est réutilisée en tant qu'élément constitutif de la solution B.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 106179180 A